# EUROPEAN PATENT APPLICATION

(11) **EP 2 922 213 A1**
(43) Date of publication of application: **23.09.2015**
(21) Application number: 15153256.1
(22) Date of filing: 30.01.2015
(51) Int. Cl.: H04B 1/44, G01K 11/26, H04B 1/525

(54) **SIGNAL PROCESSING DEVICE AND SIGNAL PROCESSING METHOD FOR A SURFACE ACOUSTIC WAVE SENSOR**

(30) Priority: 20.03.2014 JP 2014058124
(71) Applicant: DENSO CORPORATION, Kariya City Aichi 448-8661 (JP)
(72) Inventor: Tago, Norichika, Kariya-city Aichi 448-8661 (JP); Shibata, Takayuki, Kariya-city Aichi 448-8661 (JP)
(74) Representative: Vigand, Philippe

(57) **Abstract**

When a transmitter (2) transmits a signal to a surface acoustic wave device (5), a control circuit (7) turns on a switch (13) in advance. The control circuit (7) turns off a switch (17) before the signal is applied to a receiver (3), for example, a reception changeover switch (21) or a low-noise amplifier (22) after propagation through the surface acoustic wave device (5). Thus, a leak signal leaking to the receiver (3) side through the switch (13) can be made less influential.

## Description

The present invention relates to a signal processing apparatus and a signal processing method for a surface acoustic wave sensor, which detects a physical quantity by using a surface acoustic wave device.

A signal processing apparatus for a surface acoustic wave sensor (SAW sensor) of this kind includes, for example, a surface acoustic wave device (SAW device), a transmitter and a receiver. This signal processing apparatus detects a physical quantity (for example, distortion) in the following manner. When the transmitter outputs an electric signal to driving electrodes of the SAW device, the driving electrodes transduce the electric signal to mechanical vibration. The SAW device generates, in response to the mechanical vibration, a surface acoustic wave, which propagates along a propagation path of a substrate. The surface acoustic wave reflects at a reflector and the driving electrodes transduce the surface acoustic wave into an electric signal. The receiver receives this electric signal as an output signal of the SAW device.

In the propagation path of the SAW device, a phase of the surface acoustic wave changes in accordance with a change in electrical and mechanical characteristic of the propagation path. For this reason, the physical quantity is detected by detecting a phase difference between the electric signal received by the receiver and a reference signal. This receiver detects the phase difference by mixing the received electric signal with the reference signal, which has the same frequency as the output signal of the SAW device (for example, refer to JP2005-92490A).

The transmitter transmits the electric signal to the SAW device and the receiver receives the electric signal from the SAW device. For this reason, a transmission changeover switch may be provided between the SAW device and the transmitter.

However, even when the transmission changeover switch is turned off and in the off-state, the signal transmitted from the transmitter leaks to a mixer side of the receiver through the transmission changeover switch. This leak signal is mixed with the reference signal by the mixer. This causes a DC offset and lowers an accuracy of detection output of the sensor.

It is an object of the present invention to provide a signal processing apparatus and a signal processing method for a surface acoustic wave sensor, which reduce influence of a DC offset caused by a leak signal leaking from a transmitter side to a receiver side even when a transmission changeover switch is in an off-state.

According to one aspect of the present invention, a signal processing apparatus for a surface acoustic wave sensor comprises a surface acoustic wave device, a control circuit, a transmitter, a receiver and a π/2 phase shifter. The surface acoustic wave device enables detection of a physical quantity by propagating a signal as a surface acoustic wave and varying a phase of the signal in accordance with the physical quantity. The transmitter includes an oscillator for outputting a differential signal, an amplifier for amplifying the differential signal of the oscillator, a first current source configured to turn on and off supply of an amplification-enabling current to the amplifier under control of the control circuit, and a transmission changeover switch configured to turn on and off connection of the surface acoustic wave device and the amplifier under control of the control circuit. The receiver includes mixers and a reception changeover switch, which has an input node connected to an output node of the transmission changeover switch and configured to turn on and off connection of the surface acoustic wave device and the mixer under control of the control circuit. The π/2 phase shifter outputs the differential signal of the oscillator to the mixers as differential signals, which are orthogonal to each other, respectively.

The transmitter outputs an amplified differential signal of the amplifier to the surface acoustic wave device in a state that the amplification-enabling current is supplied from the first current source to the amplifier, the transmission changeover switch is turned on to an on-state by the control circuit and the reception changeover switch is turned off to an off-state by the control circuit. The receiver mixes a signal, which is transmitted to the surface acoustic wave device in the state that the transmission changeover switch is turned off by the control circuit and the reception changeover switch is turned on by the control circuit, with the differential signals, which are outputted from the π/2 phase shifter and orthogonal to each other, as reference signals, respectively. The control circuit turns off the supply of the amplification-enabling current from the first current source to the amplifier, before the control circuit turns on the reception changeover switch of the receiver and the mixers receive and mix the signals transmitted to the surface acoustic wave device.
FIG. 1 is a block diagram showing schematically a signal processing apparatus for a surface acoustic wave sensor according to one embodiment of the present invention;
FIG. 2 is an electric circuit diagram showing an example of an amplifier in the embodiment;
FIG. 3A is a plan view showing schematically an example of a SAW device;
FIG. 3B is a longitudinal sectional view taken along a line A-A in FIG. 3A;
FIG. 4 is a graph showing a DC offset;
FIG. 5 is a time chart showing an example of operation of the embodiment;
FIG. 6 is a time chart showing a change in a test power supply voltage, which is supplied to an amplifier of a comparative example;
FIG. 7 is a time chart showing an exemplary response characteristic of the amplifier of the comparative example relative to a change in the power supply voltage; and
FIG. 8 is a time chart showing an exemplary response characteristic of the amplifier of the embodiment relative to a change in the power supply voltage.

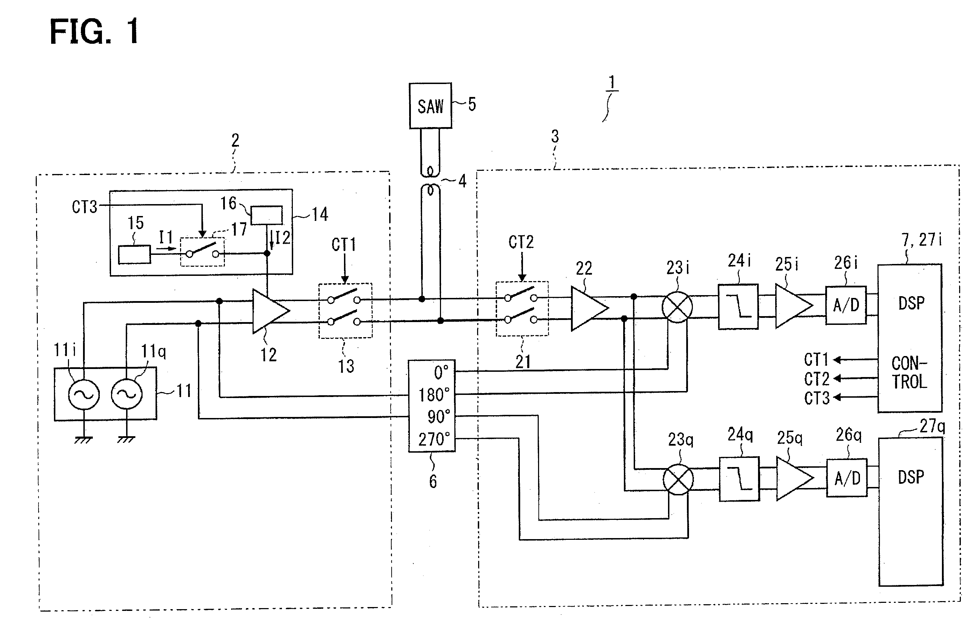

One embodiment of a signal processing apparatus for a surface acoustic wave sensor will be described with reference to the drawings. As shown in FIG. 1, a signal processing apparatus 1 for a surface acoustic wave sensor (SAW sensor) is formed of a transmitter 2, a receiver 3, an antenna 4, a surface acoustic wave device (SAW device) 5 and a π/2 phase shifter 6. The transmitter 2, the receiver 3 and the π/2 phase shifter 6 may be formed in a single unit. The receiver 3 includes a control circuit 7 therein. The control circuit 7 generates on/off control signals CT1, CT2 and CT3, which are applied to switches 13, 17 and 21 as described below. The control circuit 7 may be a microcomputer, for example.

The transmitter 2 includes an oscillator 11 (11i, 11q), an amplifier 12, a transmission changeover switch 13 (simply referred to as switch 13 below), and an operation current supply circuit 14. The oscillators 11i and 11q output to the amplifier 12 oscillation signals, which have same frequencies (for example, 200 MHz) and opposite phases, as a differential signal. A current is supplied from the operation current supply circuit 14 to the amplifier 12. The operation current supply circuit 14 includes plural (first and second) current sources 15 and 16 as well as a current changeover switch 17 (referred to simply as switch 17 below).

The switch 17 is connected between the first current source 15 and the amplifier 12 to change its state to an on-state or an off-state in response to the control signal CT3 applied from the control circuit 7. The second current source 16 is connected directly to the amplifier 12 to continuously supply a second current 12 to the amplifier 12.

The second current 12 supplied from the second current source 16 is set to be a small current (for example, 3 µA), which is far lower than the first current I1 supplied from the first current source 15. With only the second current 12 supplied from the second current source 16 of the operation current supply circuit 14, the amplifier 12 is maintained in a standby state.

The first current I1 supplied from the first current source 15 is set to be a large current (for example, 97 µA), which is far higher than the second current 12 supplied from the second current source 16. The first current I1 is supplied so that the amplifier 12 performs an amplification operation in normal time. When the switch 17 is changed over, that is, turned on, to the on-state in the normal time, a current I1+I2, which is a sum of the first current I1 and the second current I2, is supplied to the amplifier 12 as an amplification-enabling current for enabling the amplifier 12 to perform its amplification operation.

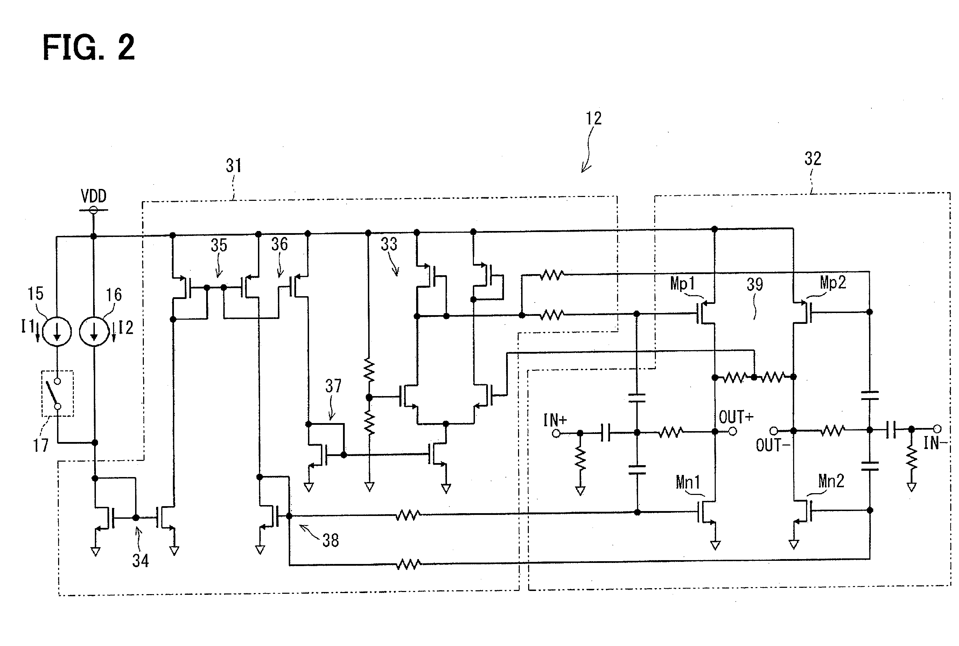

The amplifier 12 has a circuit configuration, which is schematically shown in FIG. 2. The amplifier 12 includes, for example, a bias supply stage 31 and a class-B amplifying stage 32. The second current 12 is supplied to the bias supply stage 31 from the second current source 16 in the standby state, and the first current I1 is supplied also from the first current source 15 in the normal time, in which the switch 17 is turned on and in the on-state.

The bias supply stage 31 is formed of a current source 33, current mirror circuits 34 to 38 and the like to bias the class-B amplifying stage 32. The class-B amplifying stage 32 includes a differential amplifying circuit 39. The differential amplifying circuit 39 is formed of MOS transistors Mp1, Mp2, Mn1 and Mn2 connected between a power source VDD and a ground as shown. Drains of the MOS transistors Mp1 and Mn1 are connected to a first common node. A source of the MOS transistor Mp1 is connected to the power source Vdd and a source of the MOS transistor Mn1 is connected to the ground. Drains of the MOS transistors Mp2 and Mn2 are connected to a second common node. A source of the MOS transistor Mp2 is connected to the power source Vdd and a source of the MOS transistor Mn2 is connected to the ground. The common node of the MOS transistors Mp1 and Mn1 is an output terminal OUT+ (corresponding to a first neutral-point potential). The common node of the MOS transistor Mp2 and Mn2 is an output terminal OUT- (corresponding to a second neutral-point potential).

Gates of the MOS transistors Mn1 and Mn2 are biased with predetermined potentials by using the current mirror circuits 34, 35 and 38. Gates of the MOS transistors Mp1 and Mp2 are biased with predetermined potentials by using the current mirror circuits 34, 36 and 37 as well as a current source 33.

When the second current source 16 supplies the amplifier 12 with the second current 12 with the switch 17 being in the off-state, the current mirror circuits 34, 35 and 38 supply the biases to the gates of the MOS transistors Mn1 and Mn2, and the current mirror circuits 34, 36, 37 and the current source 33 supply the biases to the gates of the MOS transistors Mp1 and Mp2.

The second current 12 of the second current source 16 is set to a smallest current value (for example, 3 µA), which can stably maintain the potentials of the output terminals OUT+ and OUT- of the differential amplifying circuit 39 with a gain of the class-B amplifying stage 32 of the amplifier 12 being substantially zero. For this reason, even when the oscillator 11 (11a and 11b) outputs the oscillation signals to input terminals IN+ and IN- of the amplifier 12 as a differential signal, the amplifier 12 hardly amplifies the differential signal and the potentials at the output terminals OUT+ and OUT-remain at generally fixed potentials.

When the switch 17 is in the on-state, the first current source 15 outputs the first current I1 to the current mirror circuit 34. Both the first current I1 and the second current 12 are supplied to the amplifier 12 as the amplification-enabling current. In this case, the bias supply stage 31 of the amplifier 12 supplies the class-B amplifying stage 32 with the bias for normal operation in accordance with operations of the current mirror circuits 37 and 38. The class-B amplifying stage 32 receives differential signal from the input terminals IN+ and IN-, performs class-B amplification and outputs an amplified signal from the output terminals OUT+ and OUT-. That is, when the switch 17 is turned on and in the on-state, the amplifier 12 performs a differential amplification operation with a gain 10, for example.

The configuration of the amplifier 12 shown in FIG. 2 is exemplary and not limited to such a circuit configuration. It may be configured differently as far as the amplifier 12 transitions to the standby state in response to the supply of only the second current 12 from the second current source 16 and transitions to the normal operation state in response to the supply of the first current I1 from the first current source 15.

Receiving the differential signal applied from the oscillators 11i and 11q in the normal state, the amplifier 12 amplifies the differential signal and outputs it to the switch 13. The switch 13 is changed over to the on-state or the off-state in response to the control signal CT1 applied from the control circuit 7. The switch 13 is initially in the on-state by the control circuit 7 to connect the amplifier 12 and the antenna 4. The amplified differential signal is outputted to the antenna 4 through the switch 13. The antenna 4 transmits the differential signal received from the amplifier 12 to the SAW device 5 wirelessly as a radio signal.

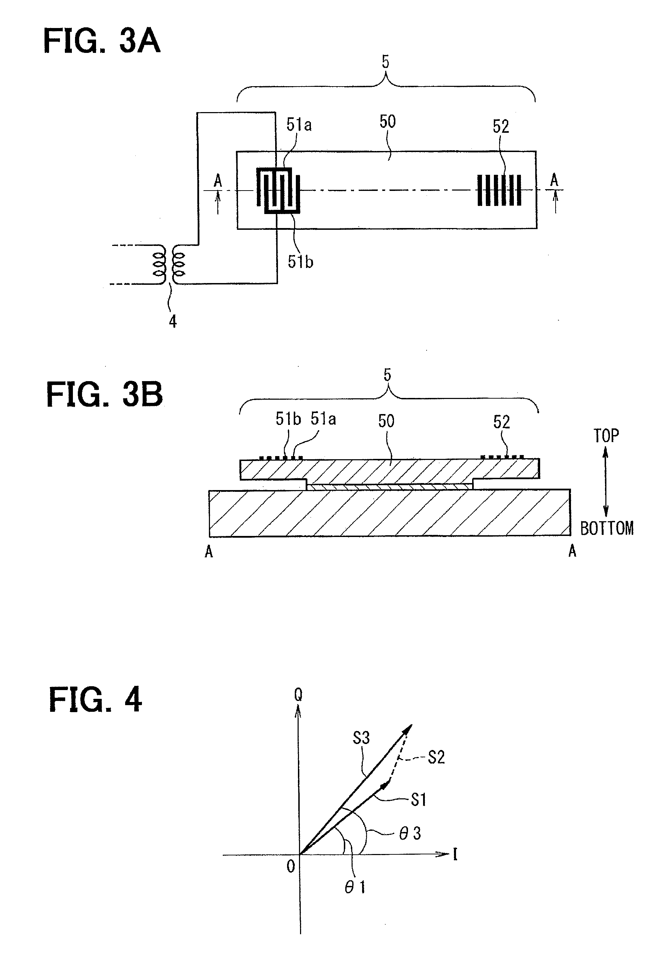

The SAW device 5 is configured as shown in FIG. 3A and FIG. 3B schematically. The SAW device 5 includes driving electrodes 51a, 51b and a reflector 52, which are formed on a surface of a substrate 50. The driving electrodes 51a, 51b and the reflector 52 are located at one end and the other end of the substrate 50, respectively, with a spacing therebetween in the longitudinal direction of the substrate 50. The substrate 50 is a piezoelectric substrate made of, for example, piezoelectric material. Each of the driving electrodes 51a and 51b has plural comb teeth. The driving electrodes 51a and 51b are located to face each other in a direction perpendicular to a direction of propagation of the surface acoustic wave with a spacing therebetween.

The comb teeth of the driving electrodes 51a and 51b are interleaved alternately in the direction of propagation (direction of reflection) of the surface acoustic wave. The driving electrodes 51a and 51b vibrate in response to the electric signal applied through the antenna 4. The driving electrodes 51a and 51b have a fixed natural frequency at the time of vibration. For this reason, an oscillation frequency of the oscillators 11i and 11q is set in correspondence to the natural frequency of the driving electrodes 51a and 51b.

The SAW device 5 receives the electric signal inputted through the antenna 4 by the driving electrodes 51a and 51b and reflects it by the reflector 52. The reflector 52 reflects the received signal towards the antenna 4 through the driving electrodes 51a and 51b. The antenna 4 transmits a reflected signal as a radio wave to be received by the receiver 3.

A reception changeover switch 21 is changed over to an on-state or an off-state in response to the control signal CT3 applied from the control circuit 7. The control circuit 7 changes over the switch 13 to the off-state while the amplified differential signal is propagating through the SAW device 5 after the amplifier 12 outputted an amplified differential signal to the antenna 4. The control circuit 7 changes over the reception changeover switch 21 to the on-state while the amplified differential signal is still propagating through the SAW device 5. The signal reflected by the SAW device 5 is transmitted mostly to the receiver 3 side with the switch 13 being turned off.

The receiver 3 includes, together with the reception changeover switch 21, a low noise amplifier (LNA) 22, mixers 23i, 23q, low-pass filters 24i, 24q, amplifiers 25i, 25q, A/D converters 26i, 26q, and digital signal processing (DSP) circuits 27i, 27q. The digital signal processing circuit 27i has a function of the control circuit 7 therein. The low noise amplifier 22 forms an initial-stage amplifier of the receiver 3. Amplified signals are applied to the mixers 23i and 23q.

The π/2 phase shifter 6 is provided between the oscillator 11 (11i, 11q) and the mixers 23i and 23q. The oscillator 11 (11i, 11q) outputs the differential signal to the π/2 phase shifter 6. The π/2 phase shifter 6 outputs four signals, which are phase-shifted by 90 degrees one another. The π/2 phase shifter 6 outputs two differential signals, which are orthogonal to each other (phase-shifted by 180 degrees), to each of the mixers 23i and 23q as reference signals.

The mixer 23i mixes the amplified differential signal amplified by the low noise amplifier 22 with one reference signal (0 degree and 180 degrees) outputted from the π/2 phase shifter 6. The mixer 23q mixes the amplified differential signal amplified by the low noise amplifier 22 with the other reference signal (90 degrees and 270 degrees) outputted from the π/2 phase shifter 6. Mixed signals of the mixers 23i and 23q are outputted to the low-pass filters 24i and 24q, respectively. The low-pass filters 24i and 24q cut off high-frequency components and pass low-frequency components of mixer output signals, which are mixed by the mixers 23i and 23q and down-converted, thereby outputting low-pass filtered signals to the amplifiers 25i and 25q, respectively.

The amplifiers 25i and 25q amplify the filter output signals, which are outputted after filtering of the low-pass filters 24i and 24q, and output amplified signals to the A/D converters 26i and 26q, respectively. The A/D converters 26i and 26q A/D-convert those signals and outputs A/D-converted signals to the digital signal processing circuits 27i and 27q, respectively. The digital signal processing circuits 27i and 27q have memories (not shown) internally and store outputted digital signals therein, respectively.

The embodiment described above operates as follows. The signal processing apparatus 1 for the surface acoustic wave sensor detects a phase difference from IQ outputs of the two mixers 23i and 23q, which are for in-phase and quadrature. As shown in FIG. 4, if a DC offset S2 arises, the offset S2 is added to a desired signal S1 as a vector component and a signal component S3 is detected. As a result, a phase component θ3 is detected with an error relative to a phase component θ1, which is to be calculated. For this reason, the DC offset α should be corrected and reduced. According to the present embodiment, the DC offset α is reduced characteristically in the following manner.

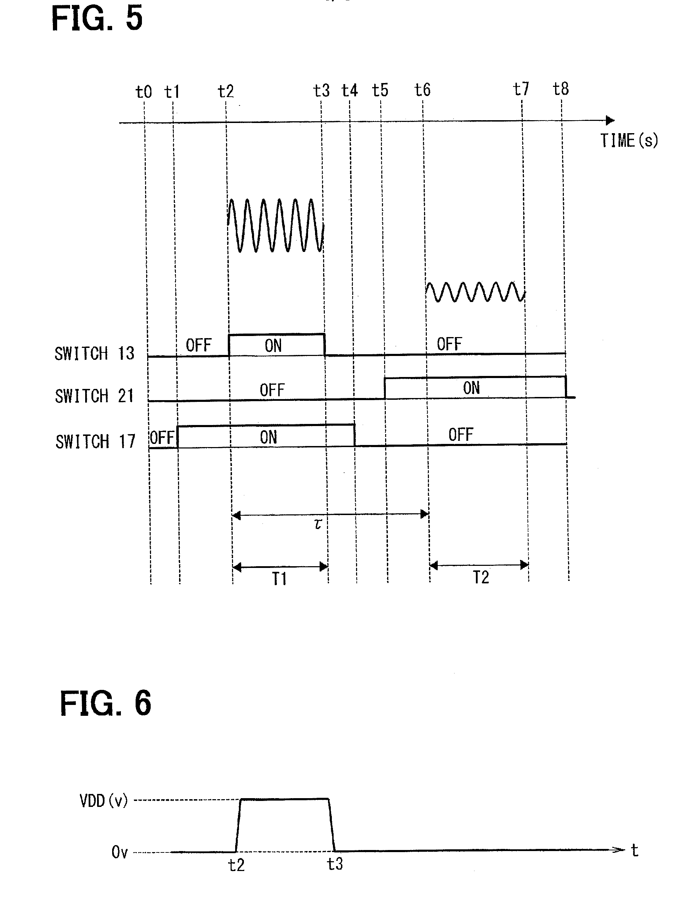

As shown in FIG. 5, the control circuit 7 holds all the switches 13, 21 and 17 in the off-state initially from time t0 to time t1. Even when all the switches 13, 21 and 17 are thus maintained in the off-state, the second current source 16 continues to supply the second current 12 to the amplifier 12. Thus the amplifier 12 stands by. Even when the oscillator 11 (11i, 11q) outputs the oscillation signals, these oscillation signals are not amplified in the standby state.

The control circuit 7 turns on the switch 17 first at time t1 to output the differential signal of the oscillator 11 (11i, 11q) to the SAW device 5. With the switch 17 being in the on-state, the first current source 15 is enabled to supply the first current I1 to the amplifier 12 through the switch 17. At this time, the first current source 15 supplies a biasing current, which the amplifier 12 needs for its amplifying operation. Thus the amplifier 12 transitions to the normal operation state from the standby state. A stabilization period required for the biasing current to be supplied stably to the amplifier 12 may be predetermined by simulation based on specifications of a circuit configuration of the amplifier 12 or the like.

After the biasing current is supplied to the amplifier 12 stably, the control circuit 7 turns on the switch 13 at time t2. The differential signal is transmitted from the oscillators 11i and 11q to mostly the SAW device 5 through the switch 13. The control circuit 7 turns on the switch 13 for only a predetermined on-period from time t2 to time t3 (for example, about 100 ns) and then turns off the same.

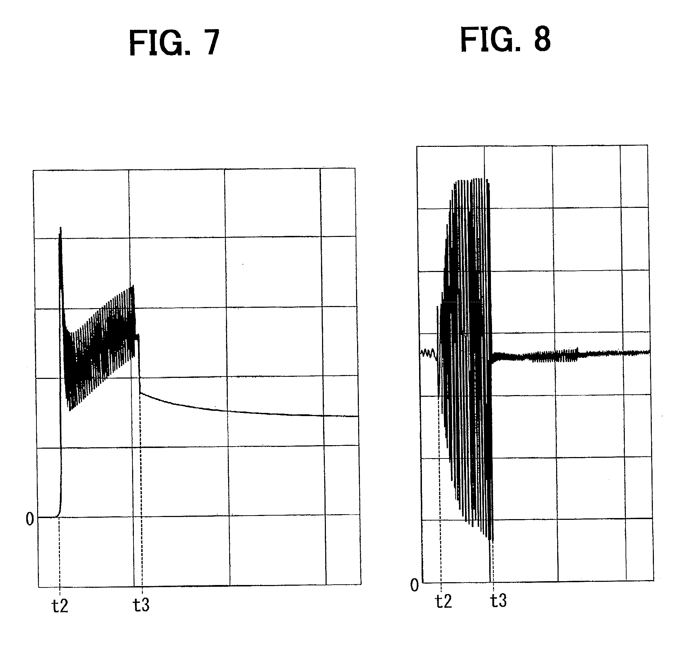

A power supply control technology according to the present embodiment and a power supply control technology according to a comparative example are compared with reference to FIG. 6 to FIG. 8. FIG. 6 shows a pulse-shaped test power supply voltage. FIG. 7 shows, as a comparative example, a waveform of an output signal, which is produced when the pulse-shaped test power supply voltage shown in FIG. 6 is applied to a generally-available class-B differential amplifier and the differential signal is applied to a differential input of the class-B differential amplifier. FIG. 8 shows an example of a signal waveform in a case that the second current 12 of the second current source 16 is applied to the amplifier 12 continuously before time t2 and the differential signal is inputted to inputs IN+ and IN- of the amplifier 12 from time t2 to time t3.

The generally-available class-B amplifier needs some time to become operative for the amplifying operation, even when the power supply voltage VDD for operation is supplied instantly. Therefore, when one pulse-shaped test power supply voltage VDD shown in FIG. 6 is applied to the generally-available class-B amplifier in the period between time t2 and time t3, the neutral-point voltage does not stabilize as shown in FIG. 7 even when time elapses after time t2. Assuming that the power supply voltage control processing is performed, it is necessary to wait until the neutral-point voltage of the class-B differential amplifier stabilizes.

However, when the second current 12 is applied to the amplifier 12 for standby at time t1, the amplifier 12 can operate to perform the amplifying operation stably as shown in FIG. 8 immediately from time t2, at which the differential signal is applied from the oscillator 11 (11a and 11b).

As shown in FIG. 5, the control circuit 7 turns off the switch 17 at time t4 after turning off the switch 13. Those switches 13 and 17 may be turned off at the same time. That is, the control circuit 7 turns on the switch 13 only when the differential signal is outputted to the SAW device 5 as the electric signal and turns off the switch 13 in other periods. The amplifier 12 supplied with the current from the second current source 16 only transitions to the standby mode. Thus, power consumption of the amplifier 12 can be reduced.

After turning off the switch 17 at time t4, the control circuit 7 turns on the reception changeover switch 21 at time t5. This on-time of the reception changeover switch 21 is set in accordance with a period of propagation of the signal through the SAW device 5. Specifically, it is set to a predetermined time within a period of propagation of the signal through the SAW device 5 to the reception changeover switch 21. For example, it is assumed that a delay time, in which the signal propagates on the SAW device 5, is τ and set to the period (for example, about 340 ns) from time t2 to time t6 for the configuration of the SAW device 5, the reception changeover switch 21 is turned on at time, which is before time t6. With this setting, the receiver 3 can receive the signal propagating through the SAW device 5. In the receiver 3 side, the low-noise amplifier 22 amplifies its input signal, which is a reflection signal from the SAW device 5, that is, the differential signal having propagated through the SAW device 5. This amplified signal is applied to the mixers 23i and 23q.

The oscillator 11 (11i, 11q) supplies the oscillation signals to the π/2 phase shifter 6. The π/2 phase shifter 6 outputs two differential signals, which are orthogonal to each other, to the mixers 23i and 23q as the reference signals, respectively. The mixers 23i and 23q mix the signal amplified by the low-noise amplifier 22 with the reference signals outputted from the π/2 phase shifter 6, respectively. The mixed signals are outputted to the low-pass filters 24i and 24q, respectively. The amplifiers 25i and 25q amplify the signals filtered by the low-pass filters 24i and 24q and output the amplified signals to the A/D converters 26i and 26q, respectively.

The A/D converters 26i and 26q A/D-convert those signals and output the A/D-converted signals to the digital signal processing circuits 27i and 27q, respectively. The digital signal processing circuits 27i and 27q store the digital signals in the internal memories (not shown), respectively. When distortion arises in the SAW device 5, a phase delay θ is caused in correspondence to a magnitude of distortion.

The signal processing method of this system will be described theoretically. Assuming that the oscillation signal of the oscillator 11i is expressed as cosωt, the signal which the receiver 3 receives from the SAW device 5 is expressed as cos(ωt+θ) taking a phase delay θ of the SAW device 5 into consideration.

The output node of the switch 13 and the input node of the reception changeover switch 21 are connected to the same node. Even when the switch 13 is in the off-state, the output signal of the amplifier 12 propagates through a substrate (not shown) and partly flows to the receiver 3 side as a leak signal. This leak signal is, for example, -50 dB in comparison to the output of the amplifier 12. The leak signal (switch leak), which directly leaks through the switch 13 in the off-state, is expressed as cos(ωt+γ).

The signals, which result from mixing by the mixers 23i and 23q, are expressed as [cos(ω+θ)+cos(ωt+γ)]▪cosωt by adding the signal received from the SAW device 5 and multiplying the reference signal. Since the low-pass filter 24i and 24q filter out the high frequency components, the signal is expressed as cosθ+cosy.

In this case, influence of the switch leaking components is detected. As a result, when the receiver 3 receives the propagation signal, which propagated through the SAW device 5, the receiver 3 mixes the leak signal in the output signal of the amplifier 12 with the reference signal outputted from the π/2 phase shifter 6. This mixing causes the DC offset. The digital signal processing circuit thus receives -cosθ+α, in which α is the DC offset.

However, according to the present embodiment, when the receiver 3 receives the propagation signal of the SAW device 5 at time t6 in FIG. 5, only the second current source 16 supplies the second current 12 to the amplifier 12 and the first current source 15 does not supply the first current I1 to the amplifier 12. Thus the amplifier 12 is not enabled to perform its amplification operation and the output signal of the amplifier is at a low level. For this reason, even when the transmitter 2 applies the leak signal to the receiver 3 side, the influence of the leak signal leaking to the receiver 3 side through the switch 13 is lowered because an output power of the amplifier 12 is regulated to be sufficiently low.

As described above, according to the present embodiment, the control circuit 7 turns on the switch 13 in advance when the transmitter 2 transmits the signal to the SAW device 5 but turns off the switch 17 before the signal propagates through the SAW device 5 and enters the receiver 3 (for example, the reception changeover switch 21 or the low-noise amplifier 22). As a result, the leak signal, which leaks to the receiver 3 side through the switch 13, can be decreased to be less influential. In addition, power consumption of the amplifier 12 can be reduced in comparison to a case that the amplifier 12 operates continuously.

Although it is possible to design the transmitter 2 to transmit a signal after phase modulation, its circuit configuration will be complicated. Although it is possible to use an attenuator to reduce a signal, the attenuator tends to become a noise source. For those reasons, according to the present embodiment, the transmitter 2 is configured to apply un-modulated excitation signal to the SAW device 5 by transmitting the differential signal of the predetermined frequency. Thus the control circuit 7 can calculate the phase delay component θ of the SAW device 5 without using the phase modulation, which complicates the circuit configuration, or using the attenuator, which tends to become the noise source.

Since the control circuit 7 turns on the switch 17 before turning on the switch 13, the oscillation signal of the oscillator 11 (11i, 11q) can be applied to the amplifier 12 after transitioning the amplifier 12 to be able to perform the amplification operation.

The amplifier 12 includes the class-B amplifying stage 32 and the second current source 16 continues to supply the predetermined current, which is set to the lowest level for maintaining the neutral-point potential with the gain of the class-B amplifying stage 32 being zero. For this reason, the amplifier 12 can be driven to perform the initial operation with its neutral-point potential being stabilized by supplying the amplification-enabling current to the amplifier 12 as a sum of the currents of the first current source 15 and the second current source 16. Since the control circuit 7 turns off the switch 17 before turning on the reception changeover switch 21, the signal can be received surely from through the SAW device 5.

The present invention is not limited to the embodiment described above but may be modified as follows for example.

The antenna 4 may or may not be provided. That is, the switch 13 and the SAW device 5 may be connected directly or connected through the antenna 4 wirelessly.

Although the receiver 3 is configured as a single conversion type device, which has only one stage of mixers 23i and 23q in the embodiment, the receiver 3 may be configured as a double conversion type device, which has two stages of mixers 23i and 23q.

Although the control circuit 7 having the function of the digital signal processing circuit 27i is configured to presidingly turn on and off the switches 13, 21 and 17 in the embodiment, it may be divided into plural parts, each of which turns on and off at least any one of the switches 13, 21 and 17. Although the control circuit 7 having the function of the digital signal processing circuit 27i presidingly control all operations in the embodiment, the digital signal processing circuit 27q may be configured to presidingly control all operations.

## Claims

1. A signal processing apparatus for a surface acoustic wave sensor comprising:
a surface acoustic wave device (5), which enables detection of a physical quantity by propagating a signal as a surface acoustic wave and varying a phase of the signal in accordance with the physical quantity;
a control circuit (7);
a transmitter (2) including an oscillator (11) for outputting a differential signal, an amplifier (12) for amplifying the differential signal of the oscillator, a first current source (15) configured to turn on and off supply of an amplification-enabling current to the amplifier under control of the control circuit, and a transmission changeover switch (13) configured to turn on and off connection of the surface acoustic wave device and the amplifier under control of the control circuit;
a receiver (3) including mixers (23i, 23q) and a reception changeover switch (21), which has an input node connected to an output node of the transmission changeover switch and configured to turn on and off connection of the surface acoustic wave device (5) and the mixer (23i, 23q) under control of the control circuit; and
a π/2 phase shifter (6) for outputting the differential signal of the oscillator (11) to the mixers (23i, 23q) as differential signals, which are orthogonal to each other, respectively,
**characterized in that**
the transmitter (2) outputs an amplified differential signal of the amplifier (12) to the surface acoustic wave device (5) in a state that the amplification-enabling current is supplied from the first current source (15) to the amplifier (12), the transmission changeover switch (13) is turned on to an on-state by the control circuit (7) and the reception changeover switch (21) is turned off to an off-state by the control circuit (7),
the receiver (3) mixes a signal, which is transmitted to the surface acoustic wave device (5) in the state that the transmission changeover switch (13) is turned off by the control circuit (7) and the reception changeover switch (21) is turned on by the control circuit (7), with the differential signals, which are outputted from the π/2 phase shifter (6) and orthogonal to each other, as reference signals, respectively, and
the control circuit (7) turns off the supply of the amplification-enabling current from the first current source (15) to the amplifier (12), before the control circuit (7) turns on the reception changeover switch (21) of the receiver (3) and the mixers (23i, 23q) receive and mix the signals transmitted to the surface acoustic wave device (5).

2. The signal processing apparatus according to claim 1, wherein:
the transmitter (2) includes a second current source (16) in addition to the first current source (15);
the amplifier (12) includes a class-B amplifying stage (32);
the second current source (16) continuously supplies a predetermined current to the amplifier (12), the predetermined current being set to a level for maintaining a neutral-point potential under a state that a gain of the class-B amplifying stage (32) is zero; and
the first current source (15) supplies a first current to the amplifier (12) in addition to the second current of the second current source so that a sum of the first current and the second current is supplied as the amplification-enabling current.

3. A signal processing method for a surface acoustic wave sensor comprising:
a process of turning on a transmission changeover switch (13) by a control circuit (7) to connect an amplifier (12) and a surface acoustic wave device (5);
a process of turning off a reception changeover switch (21) by the control circuit (7) to disconnect the surface acoustic wave device (5) from mixers (23i, 23q);
a process of turning on a supply of amplification-enabling current from a first current source (15) to the amplifier (12) by the control circuit (7);
a process of amplifying by the amplifier (12) a differential signal outputted from an oscillator (11) and transmitting an amplified signal of the amplifier (12) to the SAW device (5) through the transmission changeover switch (13);
a process of outputting the differential signal of the oscillator (11) to the mixers (23i, 23q) as differential signals, which are orthogonal to each other, by a π/2 phase shifter (6);
a process of turning off the transmission changeover switch (13) by the control circuit (7) while the signal is propagating through the surface acoustic wave device (5);
a process of turning on the reception changeover switch (21) by the control circuit (7) to connect the surface acoustic wave device (5) and the mixers (23i, 23q);
a process of receiving a signal propagating through the surface acoustic wave device (5) through the reception changeover switch (21) by the receiver (3) and mixing received signals with the differential signals outputted from the π/2 phase shifter (6) as reference signals by the mixers (23i, 23q) in the receiver (3), respectively; and
a process of turning off a supply of the amplification-enabling current of the first current source (15), which is turned on for current supply, by the control circuit (7), before the receiver (3) receives through the reception changeover switch (21) and mixes the signal propagating through the surface acoustic wave device (5) with the reference signals by the mixers (23i, 23q).

4. The signal processing method for a surface acoustic wave sensor according to claim 3, wherein:
the control circuit (7) turns off the transmission changeover switch (13) to connect the amplifier (12) and the surface acoustic wave device (5), before the control circuit (7) turns off the supply of the amplification-enabling current of the first current source (15).

5. The signal processing method for a surface acoustic wave sensor according to claim 3 or 4, wherein:
the control circuit (7) turns on the supply of the amplification-enabling current of the first current source (15) to the amplifier (12), before the control circuit (7) turns on the transmission changeover switch (13) to connect the amplifier (12) and the surface acoustic wave device (5).
